# EUROPEAN PATENT APPLICATION

(11) **EP 1 635 355 A1**
(43) Date of publication of application: **15.03.2006**
(21) Application number: 04745470.7
(22) Date of filing: 01.06.2004
(51) Int. Cl.: G11B 33/02

(54) **DISK DRIVE DEVICE AND INSTALLATION MECHANISM FOR DISK DRIVE DEVICE**

(30) Priority: 03.06.2003 JP 2003158223
(71) Applicant: CITIZEN WATCH CO. LTD., Tokyo 188-8511 (JP)
(72) Inventor: Ohishi, Yoshiyuki, c/o Citizen Watch Co., Ltd.,, Nishitokyo-shi Tokyo 1888511 (JP)
(74) Representative: Strehl Schübel-Hopf & Partner
(86) International application number: PCT/JP2004/007505
(87) International publication number: WO 2005/013279

(57) **Abstract**

Instead of installation using screws, an installation mechanism is configured by an installation structure formed on a disk drive side and a mating installation structure formed on a system unit side and, using this mechanism, the disk drive is installed and fixed in the system unit. The installation structure on the disk drive has a fitting member that fits the disk drive into the system unit side, and this fitting member fits the disk drive into the system unit side for installing and fixing it therein without using screws. This increases workability and installability and reduces installation costs.

## Description

### TECHNICAL FIELD

The present invention relates to the installation of a disk drive in a system unit. The present invention relates to a disk drive having a configuration for installation in a system unit, and to an installation mechanism for installing a disk drive in a system unit by allowing the disk drive and the system unit to work together.

### BACKGROUND ART

The disk drive of a flexible disk device and so on is installed externally to, or internally in, the system unit such as a personal computer. An internal flexible disk device is installed by fixing it in the system unit by the manufacturer at manufacturing time or by fixing it in a free bay of the system unit by the user. In addition, at repair time or replacement time, it is sometimes required to remove the disk drive from the system unit or to install the disk drive in the system unit.

As the installation structure of a disk drive in the system unit, screws are usually used as fixing means. Some of such installation structures are described, for example, in Patent Documents 1 and 2.

The installation structure disclosed in Patent Document 1 is that an installation unit is provided on the shield cover of a flexible disk device and this installation unit is screwed on the installation plate on the board on the system unit side.

The installation structure disclosed in Patent Document 2 is that an installation strip is provided on the side of the shield cover of a flexible disk device and the disk drive is screwed on the system unit via this installation strip.
Patent Document 1: Japanese Utility Model Application No. Hei 06-77097
Patent Document 2: Japanese Utility Model Application No. Hei 04-31494

The structure, in which the disk drive is installed in the system unit using screws as described above, has the following problems caused due to the screwing.

The structure, in which the disk drive is installed using screws, requires the user to tighten or loosen the screws each time the disk drive is installed or removed. Normally, at least three screws are installed on one disk drive. Therefore, the installation work involving screwing in the system unit, where installation environment is restricted, is a burden to the worker and takes long.

In general, screws are sometimes tightened incompletely. Loose screwing becomes a factor that contributes to the incomplete fixing of the disk drive in the system unit and incomplete fixing, in turn, becomes a factor that causes the disk drive to be disengaged from the system unit.

When screws apply stress to the housing, there is a danger that the housing is deformed or warped by this stress. The housing determines the reference position of the head. Therefore, a deformation or warp in the housing may become a factor of misalignment in the head.

A structure in which screws are used for installation requires parts, that is, screws, for installation the disk drive. The screws also become a factor of higher costs.

Therefore, it is an object of the present invention to solve the prior art problems, to increase the efficiency of installation work by not using screws for installing and fixing a disk drive in a system unit, and to increase the installability of a disk drive in a system unit. It is another object of the present invention to reduce installation costs.

In accordance with the present invention, a disk drive is installed in a system unit by using an installation structure formed on the disk drive side and a mating installation structure formed on the system unit side instead of installing the disk drive using screws. The present invention provides this installation structure to increase installation workability and installability. In addition, the present invention eliminates the need for screws, thus reducing installation costs.

The disk drive according to the present invention is applicable to an FD (flexible disk: floppy (registered trademark) disk) device, an MO (magneto optical disc) disc device, a CD (compact disc)-ROM disc device, and a DVD (digital video disc) disc device.

The present invention is implemented as a form of a disk drive or as a form of an installation mechanism comprising the components on the disk drive and the components on the system unit side.

A first form of the present invention is implemented as a form of a disk drive. The disk drive comprises a head for recording data on a disk and reading data from a disk; a disk driving motor for rotating the disk; a housing in which the head and the disk driving motor are stored; and an installation structure for installing the disk drive in a system unit side.

The installation structure of the disk drive according to the present invention comprises a fitting member that fits in the system unit side. The disk drive, which fits in the system unit side via this fitting member, is installed and fixed in the system unit without using screws.

A first mode of the fitting member is a protrusion that protrudes from the housing. The disk drive uses this protrusion as a fitting member to fit in the system unit side and is installed and fixed in the system unit. The protrusion configures a guide that slides in a long groove provided on the system unit side. The protrusion is fit in, and slid in, the long groove for moving the disk drive at a predetermined position for installation.

The housing has a configuration that has protrusions on it. Therefore, there is no need for installing separately provided protrusions on the housing. This increases workability and reduces costs.

Because the disk drive is fixed in the system unit by fitting the protrusion in the long groove, screws are not required for fixing. It is also possible to provide a configuration in which a lever member is provided on the long groove side and the protrusion that is fit in the long groove is latched by this lever member to prevent the disk drive from being separated from the system unit.

The protrusions can be formed integrally with the housing of the disk drive. Integrating the protrusions with the housing eliminates the need for parts used as protrusions and the need for the part installation work.

In the configuration in which the protrusions are integrated with the housing of the disk drive, the housing can be made of a plate material and the protrusions can be formed by applying the burring work to this plate material. The burring work is a work method for forming an opening in the plate material and forming a protrusion by protruding the opening. The housing and the protrusions can be formed integrally by applying the burring work to a part of the plate material of the housing to form the protrusions thereon. The burring work used to form protrusions makes the work easy and ensures high work accuracy and high positional accuracy.

Not only the burring work but also other works such as the bending (press) work and choke work can be applied to the integral formation of the protrusions and the housing. It is also possible to form a part of the housing using resin and to integrally form the protrusions and the housing made of resin.

The protrusion formed by the burring work can have a hollow, cylindrical shape with an opening at the end in the direction of protrusion. A screw part may be also formed on the inside surface of the hollow of the protrusion.

In one mode of the fitting of the installation mechanism, the fitting member of the installation structure is the protrusion having the cylindrical shape, and the outside surface of the cylindrical shape is a fitting surface that fits in the mating installation structure provided on the system unit side.

In an additional mode of the fitting of the installation mechanism, the hollow of the protrusion may also be used as a screw hole via which the installation structure is screwed onto a mating installation structure provided on the system unit side. According to this structure, a screw is inserted into the mating installation structure and the hollow screw hole to fasten the structure and to make the fitting secure. This screwing, which is additionally done for making the fitting via the protrusion more secure, is not always required for installing the disk drive in the system unit and can be omitted or selectively employed. This selective screwing improves screwing workability.

The screwing through the hollow part of the protrusion constitutes a configuration in which the disk drive is installed more firmly through the fitting of the protrusion. Because the screwing stress is not applied to the housing in this configuration, the housing is neither deformed nor warped.

Therefore, this additional screwing configuration does not conflict the object of the present invention stating that screws are not used in installing and fixing the disk drive in the system unit.

A second mode of the fitting member is a long groove provided on the housing. The disk drive uses this long groove as the fitting member for fitting into the system unit side and is installed and fixed in the system unit. The long groove configures a guide in which the protrusion provided on the system unit side slides. With the protrusion fit in the long groove, the disk drive is slid and moved to a predetermined position for installation.

The inside surface of the edge of the long groove is used as the fitting surface that fits the protrusion provided on the mating installation structure provided on the system unit side. The installation structure of the disk drive may comprise a long groove as well as a lever member that latches the protrusion on the system unit side. The lever member latches the protrusion that fits in the long groove to prevent the disk drive from being separated from the system unit.

In the first and second modes of the fitting member of the first form of the present invention, the fitting member may be provided on the side and also on the bottom of the housing.

The housing can have a configuration comprising a frame and a cover. The frame supports the head and the disk driving motor. The cover comprises a top cover and a bottom cover that engage the frame to cover the top and the bottom of the frame. In this configuration, the protrusion can be formed on the bottom cover of the housing. The housing can be formed integrally with the top frame and the cover. In this configuration, the protrusions can be formed on the frame of the housing.

The configuration, in which the protrusions are formed on the bottom cover, allows the protrusions to be created easily. In addition, because the bottom cover can be replaced easily, the protrusions can also be replaced easily.

A second form of the present invention is implemented as a form of an installation mechanism comprising the components on both the disk drive and the system unit side. The installation mechanism of the disk drive is an installation mechanism for installing the disk drive in the system unit.

The disk drive comprises a head for recording data on a disk and reading data from a disk; a disk driving motor for rotating the disk; a housing in which the head and the disk driving motor are stored; and an installation structure for installing the disk drive in the system unit side.

The disk drive comprises protrusions, which protrude from the housing, as the installation structure. On the other hand, the system unit comprises long grooves, in which the protrusions fit, and a lever member for latching the protrusions that fit in the long grooves.

The installation mechanism is composed of the protrusions on the disk drive side and the long grooves on the system unit side, which work together and fit together for installing the disk drive in the system unit. In this case, the protrusions slide and move in the long grooves for fitting therein.

As is apparent from the above description, the present invention increases the installation workability when a disk drive is installed and fixed in a system unit. The present invention also increases the installability of the disk drive in the system unit. The installation costs can be reduced.

### DISCLOSURE OF THE INVENTION

### BRIEF DESCRIPTION OF THE DRAWINGS

FIG. 1 is a general perspective view showing the whole of a disk drive of the present invention in an exploded form;
FIG. 2 is a general perspective view showing the whole of the disk drive of the present invention;
FIG. 3 is a general diagram showing the bottom cover of the disk drive of the present invention;
FIG. 4 is a diagram showing an example of the cross section of a protrusion of the present invention;
FIG. 5 is a perspective view showing an installation mechanism of the disk drive of the present invention;
FIG. 6 is a perspective view showing an installation mechanism of the disk drive of the present invention;
FIG. 7 is a diagram showing the operation of a lever member of the present invention;
FIG. 8 is a diagram showing the operation of the installation mechanism of the disk drive of the present invention;
FIG. 9 is a general perspective view showing another embodiment of a disk drive of the present invention;
FIG. 10 is a diagram showing the operation of another embodiment of the disk drive of the present invention;
FIG. 11 is a diagram showing another example of the configuration of a protrusion of the present invention;
FIG. 12 is a diagram showing another example of the configuration for preventing the disk drive of the present invention from being separated from the system unit;
FIG. 13 is a diagram showing another embodiment of a disk drive of the present invention;
FIG. 14 is a diagram showing an example of the configuration for preventing the disk drive in another embodiment of the present invention from being separated from the system unit;
FIG. 15 is a diagram showing an example of the configuration for preventing the disk drive in another embodiment of the present invention from being separated from the system unit;
FIG. 16 is a diagram showing an example of the configuration for preventing the disk drive in another embodiment of the present invention from being separated from the system unit;
FIG. 17 is a diagram showing the fitting of the disk drive into the system unit using a guide unit of the present invention;
FIG. 18 is a diagram showing an example of the configuration of an engagement unit when the guide unit of the present invention is used as a fitting unit;
FIG. 19 is a diagram showing another example of the configuration of the engagement unit when the guide unit of the present invention is used as the fitting unit; and
FIG. 20 is a diagram showing another example of the configuration of the engagement unit when the guide unit of the present invention is used as the fitting unit.

### BEST MODE FOR CARRYING OUT THE INVENTION

A disk drive and a disk drive installation mechanism in the best mode for carrying out the present invention will be described below with reference to the drawings.

The following describes in detail a disk drive and a disk drive installation mechanism according to the present invention with reference to the drawings.

In an embodiment shown below, a combination of protrusions and long grooves will be described as an installation mechanism for installing a disk drive in a system unit. The protrusions and the long grooves are provided, one on the disk drive and the other on the system unit, and are fit together to install and fix the disk drive in the system unit. Which of the protrusions and the long grooves are provided on which of the disk drive and the system unit is arbitrary.

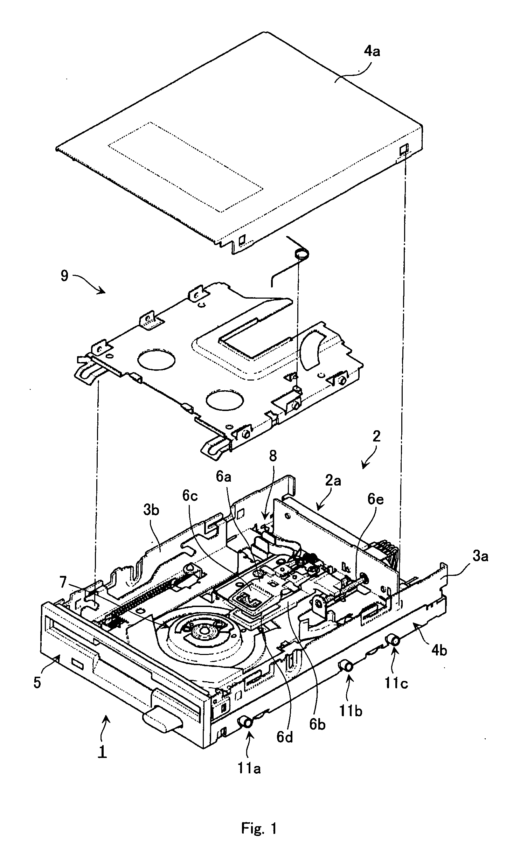

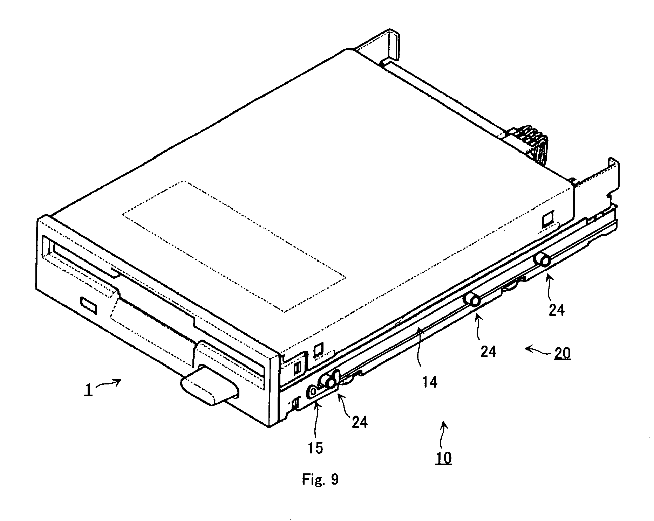

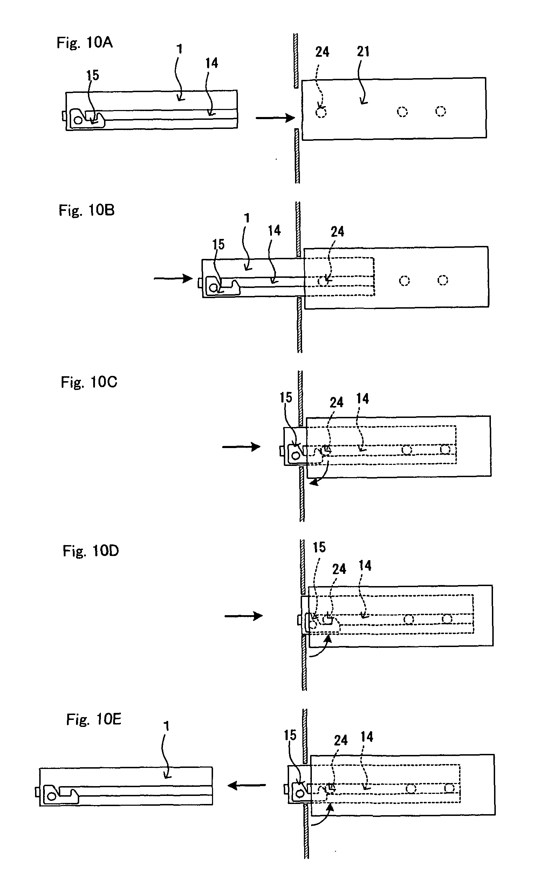

The following describes an embodiment in which the protrusions are provided on the disk drive and the long grooves are provided on the system unit with reference to FIG. 1 to FIG. 8, and an embodiment in which the long grooves are provided on the disk drive and the protrusions are provided on the system unit with reference to FIG. 9 and FIG. 10. In the description below, a flexible disk (floppy (registered trademark) disk)) drive is used as an example of the disk drive.

First, a first embodiment of the present invention will be described. The first embodiment has a configuration in which the protrusions are provided on the disk drive and the long grooves are provided on the system unit.

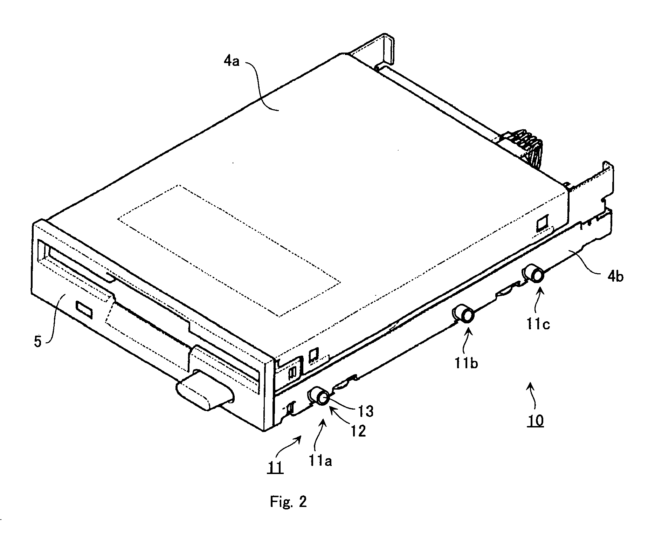

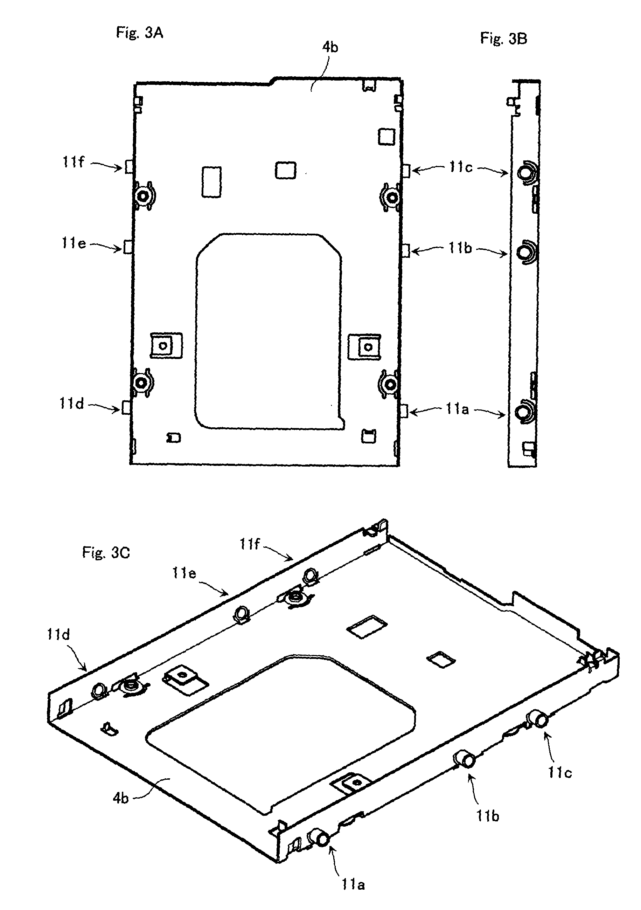

FIG. 1 is a general perspective view showing the whole of a disk drive of the present invention in an exploded form, FIG. 2 is a general perspective view showing the whole of the disk drive of the present invention, and FIG. 3 is a general diagram showing the bottom cover of the disk drive of the present invention.

Referring to FIG. 1, a disk drive 1 comprises a housing 2, a front panel 5, and a carrier 9. The carrier 9 is attached to the inside of a slide plate (not shown). The slide plate, removable from the housing 2, is installed so that it can slightly move back and forth. The housing 2 also has the front panel 5 and a top cover 4a installed thereon.

The carrier 9 attached to the slide panel engages the housing 2 in such a way that it can move up and down in relation to the housing 2 and, as the slide plate moves back and forth, moves up and down.

The housing 2, which has the shape of a rectangular container having sidewalls 3a and 3b, has the front panel 5 installed on the front (front left part in the figure). A flexible disk (not shown) inserted from the front panel 5 is stored inside the carrier 9. A frame 2a of the housing 2 can have a configuration in which its top and the bottom are covered by a cover 4, which includes the top cover 4a and a bottom cover 4b, and the cover 4 can be configured as a part of the housing 2.

A head 6, a disk driving motor 7 that drives a flexible disk, and a control circuit board 8 are installed inside the housing 2. The head 6 includes an arm 6a and a carriage 6b. The arm 6a has its end rotatably supported by the carriage 6b and is energized to narrow the space to the carriage 6b by a spring. A bottom head 6d is provided at the end of the carriage 6b, and a top head 6c is secured at the end of the arm 6a that is opposed to the carriage 6b.

The carriage 6b is guided by a guide rod (not shown) provided in the housing 2 and, at the same time, a part of the extension of the carriage 6b engages a screw shaft 6e rotated by a stepping motor. Therefore, the arm 6a and the carriage 6b are moved by the stepping motor.

The disk drive 1 has an installation structure 10 for installing itself in the system unit. Each of the sidewalls of the bottom cover 4b has at least two (that is, a total of at least four) protrusions 11 on the front-end side and back-end side of the disk drive 1. The protrusions 11 constitute the installation structure 10 of the disk drive 1 side. On the other hand, the system unit side has a mating installation structure 20 (not shown in FIG. 1) that mates with the installation structure 10 on the disk drive 1 side. The disk drive is installed in the system unit by combining the installation structure 10 and the mating installation structure 20.

Referring to FIG. 1, three protrusions, 11a, 11b, and 11c, are provided on the right sidewall 3a of the bottom cover 4b of the disk drive 1. Although not shown in FIG. 1, the protrusions are provided similarly on the left sidewall 3b of the bottom cover 4b. To securely install the disk drive on the mating installation structure (not shown) such as the one on the system unit, at least two protrusions 11 are provided on the disk drive 1, one on the front-end side and the other on the back-end side.

The perspective view in FIG. 2 shows the state of the disk drive that has the carrier 9, shown in FIG. 1, assembled into the housing 2 and the top cover 4a installed thereon. FIGS. 3A, 3B, and 3C are the top view, the side view, and the perspective view of the bottom cover of the disk drive according to the present invention.

The protrusions 11, protruded outward from the sidewalls of the bottom cover 4b, constitute fitting members. The protrusion 11 has a cylindrical outer shape. This cylindrical outer part acts as the fitting surface for fitting with the fitting member (for example, long groove) on the system unit side.

The protrusions 11, which work with the fitting members (for example, long grooves) on the system unit side, have the guide function for sliding the disk drive 1 in and out of the system unit side. The protrusions 11 work as a guide for guiding the disk drive 1 into the system unit.

The protrusions 11 can be provided not only on the bottom cover 4b as shown in the figure but also on the sidewalls of the frame 2a of the housing 2 when the bottom cover 4b is not provided. The protrusions 11 may also be provided on the top cover 4a.

The protrusions 11 can be formed integrally with the bottom cover 4b or with the frame 2a by burring the plate member of the bottom cover 4b or the frame 2a.

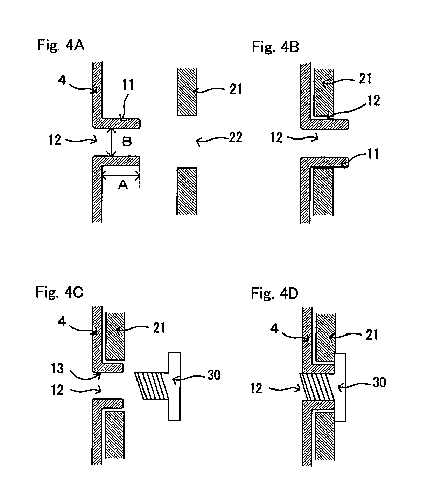

FIG. 4 shows an example of the cross section of a protrusion and shows an example of the configuration of a protrusion formed by the burring work. The cylindrical protrusion 11 is formed by the burring work. The burring work comprises the steps of forming an opening in the plate member 4 and extending the opening outward for protruding it. Those steps of the burring work form a hollow part 12 inside the cylindrical part of the protrusion 11.

Referring to FIG. 4, the mating installation structure 20 on the system side comprises system side support member 21 and a long groove 22 formed on the system side support member 21. The protrusion 11 on the disk drive 1 fits in the long groove 22. This fitting installs the disk drive 1 in the system side. In this fitting, the outside surface of the protrusion 11 and the inside surface of the edge of the long groove 22 each act as the fitting surface. Fitting these fitting surfaces together causes the disk drive to be installed in the system unit. FIG. 4B shows the fitting state.

The protrusion length A of the cylindrical part formed by the burring work is, for example, 2.9 mm - 3 mm with the burring diameter B being 3.6 mm. An example of the dimensions is determined based on the requirements that the optimum plate thickness of the housing that is 0.6 mm from the viewpoint of strength and workability and on the requirements that the manufacturing process is shared between a housing with protrusions and a housing without protrusions for increasing manufacturing process efficiency.

The protrusion length must be long for a protrusion-type housing with protrusions. To lengthen the protrusion length, the diameter of an opening in the housing must be small. On the other hand, for a screw-type housing without protrusions, the diameter of an opening in the housing must be large for screwing.

As described above, the contradicting sizes are required for the diameter of an opening in the housing. One method for satisfying the contradicting requirements is to manufacture two types of housings having different diameters. Manufacturing two types of housings having different diameters requires different manufacturing processes. Providing a plurality of manufacturing processes according to the diameter sizes has problems in the manufacturing efficiency of housings.

From the viewpoint of efficiency of housing manufacturing, the manufacturing process should preferably be shared. Therefore, in the manufacturing process preceding the burring work, the manufacturing process is shared by using the same housing both for a small-diameter, protrusion-type housing and for a large-diameter, screw-type housing.

The example of dimensions given above is best for satisfying the requirements that the manufacturing process should be shared in the manufacturing process of two types of housings.

It is also possible to set the protrusion length A and the burring diameter B according to the installation dimensions such as the thickness dimensions of the plate material of the bottom cover 4, the thickness dimensions of the system side support member 21, and the dimensions of clearance between a sidewall 3 of the disk drive 1 and the system side support member 21.

When the protrusion is formed by the burring work, the hollow part 12 is formed in the cylindrical part of the protrusion 11. It is also possible to form a screw part 13 on the inside surface of the hollow part 12 or to install the disk drive 1 using the screw part 13. FIGS. 4B and 4C show the installation of the disk drive 1 using the screw part 13 formed on the inside surface of the hollow part 12. With the protrusion 11 fit into the long groove 22, a screw 30 is inserted from outside the system side support member 21 into the screw part 13 of the hollow part 12 to securely fix the disk drive 1 in the system side.

This screwing, which is done not for installing the disk drive in the system unit but as additional work for firmly fitting the disk drive into the system unit using the protrusions, is optional work that is done as necessary. It is possible to do the screwing at some protrusions selected from the plurality of protrusions. This selective screwing improves screwing workability.

The screwing through the hollow part of the protrusion constitutes a configuration in which the disk drive is installed more firmly than by fitting the protrusions into grooves. Because the screwing stress is applied primarily to the protrusions, the housing free from the stress is neither deformed nor warped.

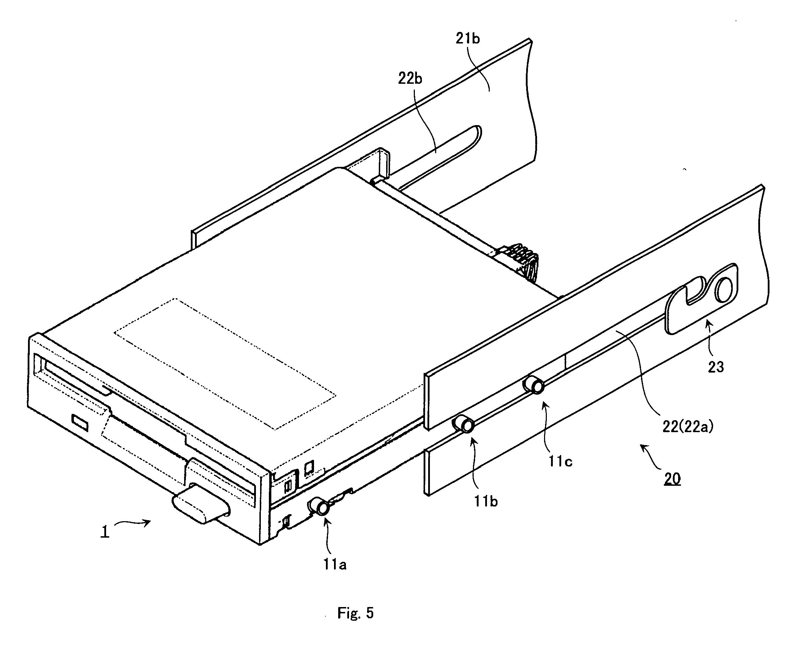

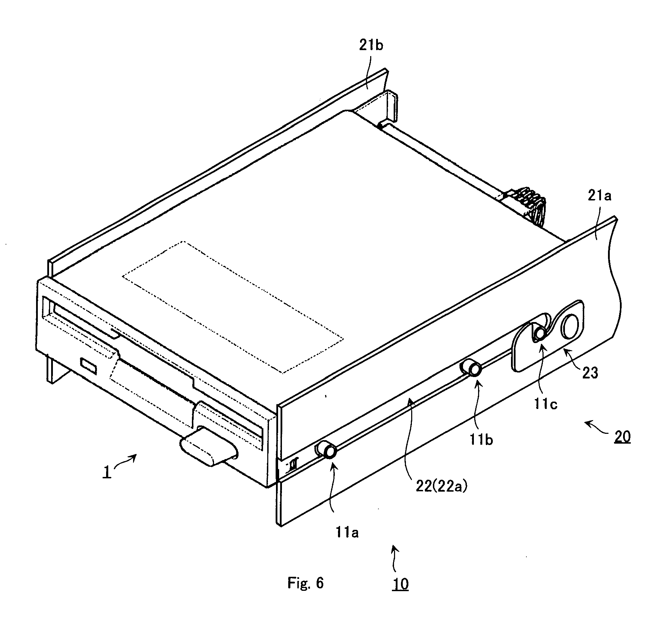

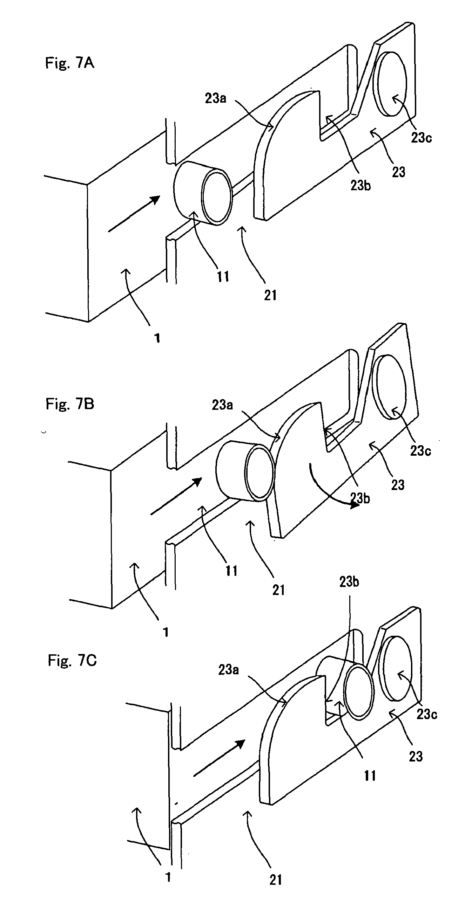

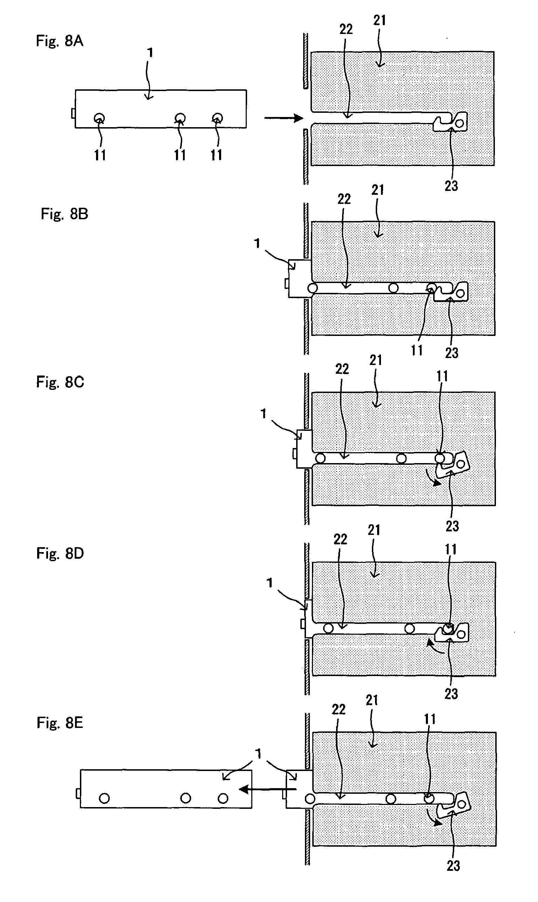

Next, the operation of installing the disk drive in the system unit and the configuration in which the disk drive is held to the system unit side will be described with reference to FIG. 5 to FIG. 8. FIGS. 5 and 6 are perspective views of the installation mechanism of the disk drive, FIG. 7 is a diagram showing the operation of a lever member, and FIG. 8 is a diagram showing the operation of the installation mechanism of the disk drive.

Referring to FIG. 5 to FIG. 8, the system unit side has the mating installation structure 20. The mating installation structure 20 comprises the system side support members 21 (21a, 21b), the long grooves 22 (22a, 22b) provided on the system side support members 21 (21a, 21b), and a lever member 23. The lever member 23 may be provided on one side or both sides of the system side support members 21a and 21b. In FIG. 5 - FIG. 8, the lever member 23 is provided on the system side support member 21a.

To install the disk drive 1 in the system unit side, the end opposite to the front panel 5 of the disk drive 1 is inserted from the system unit side (FIG. 8A) and the protrusions 11 on the disk drive 1 are slid to the predetermined positions along the long grooves 22 (FIG. 8B) until the outside surface of the protrusions 11 are fit with the inside surface of the long grooves 22 (FIGS. 8C, 8D). FIG. 5 shows the state in which the disk drive is being moved, and FIG. 6 shows the state in which the disk drive 1 is slid to the predetermined position.

The lever member 23 is provided at a position where it engages the protrusion 11 when the disk drive 1 is moved to a predetermined position and reaches the installation position in the system side support member 21. As shown in FIG. 7, the lever member 23, which comprises an abutment surface 23a that abuts on the protrusion 11 and a latching surface 23b, is rotatably supported on an axis 23c. A spring member (not shown) that energizes the lever member 23 into one direction is provided on the axis 23c, and the lever member 23 is held in a predetermined position by a stopper (not shown). The holding position of this lever member 23 is set at a position at which the protrusion 11 sliding in the long groove 22 abuts on the abutment surface.

When the protrusion 11 abuts on the abutment surface 23a (FIG. 8B), the lever member 23 is pushed by the protrusion 11 as shown in FIG. 7B and is axially rotated along the inclined surface of the abutment surface 23a against the energizing force of the spring member. As the protrusion 11 further slides in the long groove 22 (FIG. 8C), the protrusion 11 reaches the back end of the abutment surface 23a. When the protrusion 11 runs past the back end, the lever member 23 is returned to the original holding position by the spring member as shown in FIG. 7C and the latching part 23b of the lever member 23 engages the protrusion 11 (FIG. 8D). Once they are engaged, the lever member 23 holds the protrusion 11 in the predetermined position to prevent the disk drive 1 from being separated from the system unit side.

On the other hand, to remove the disk drive 1 from the system unit side, the lever member 23 is turned against the force of the spring member to disengage the latching part 23b of the lever member 23 from the protrusion 11 and the disk drive 1 is slid toward the outside along the long groove 22 (FIG. 8E).

Next, with reference to FIG. 9 and FIG. 10, a second embodiment will be described. In the second embodiment, long grooves are provided on a disk drive, and protrusions are provided on the system unit.

Referring to FIG. 9, a disk drive 1 has long grooves 14 formed on the sidewalls of a bottom cover 4b or on the sidewalls of the housing as an installation structure 10. On the other hand, the system unit has protrusions 24 as a mating installation structure 20. The long grooves 14 and the protrusions 24 work together to constitute the installation mechanism for installing the disk drive 1 in the system unit. The relation between the long grooves and the installation structure is similar to that in the first embodiment described above except that the installation position of the protrusions and the long grooves is the reverse of that of the protrusions and the long grooves in the first embodiment.

Referring to FIG. 10, the disk drive 1 is inserted into the system unit and is slid with the protrusions 24 on a system side support member 21 on the system unit side fit into the long grooves 14 on the disk drive 1 side (FIG. 10A and FIG. 10B).

A lever member 15 is provided at the end of the long groove 14. This lever member 15 abuts on the protrusion 24 by sliding the disk drive 1 (FIG. 10C). The abutment causes the lever member 15 to turn and to engage the protrusion 24 (FIG. 10D). Once the lever member 15 and protrusion 24 are engaged, the disk drive 1 is fixed on the system side support member 21 to prevent the disk drive 1 from being separated from the system side.

To remove the disk drive 1 from the system unit side, the lever member 15 is turned into the arrow direction shown in FIG. 10E to disengage the lever member 15 from the protrusion 24 and then the disk drive 1 is removed from the system unit side.

When the disk drive 1 is installed in or removed from the system unit, the combination of the long groove 14 and the protrusion 24 is used not only as a fitting member for fixing the disk drive 1 in the system unit but also as a guide for sliding the disk drive 1.

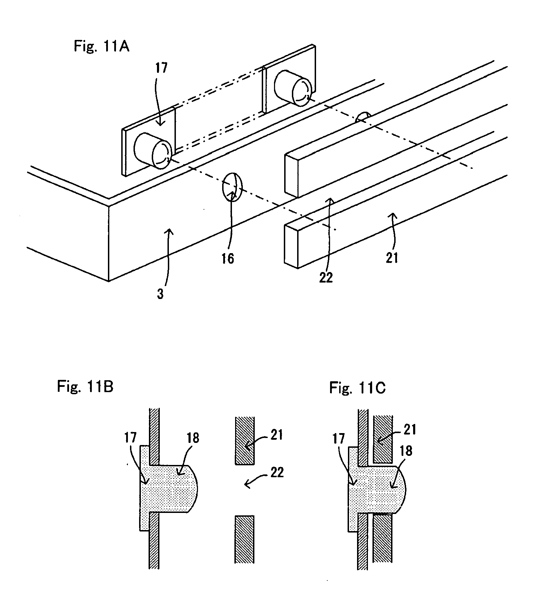

The following describes another example of the configuration of a protrusion according to the present invention with reference to FIG. 11. A protrusion can be formed not only by burring the plate material forming the housing as in the embodiment described above but also by using resin. FIG. 11 shows an example of a protrusion member made of resin that is configured by letting a protrusion member 17, which has a protrusion 18, through an opening 16 formed on a sidewall 3 of the housing.

The protrusion 18 of the protrusion member 17 fit into the long groove 22 formed on the system side support member 21 and, by doing so, the disk drive can be installed in the system unit side (FIGS. 11B and 11C). Although the protrusion member 17 is provided for each opening 16 in FIG. 11, a configuration in which a plurality of protrusions 18 are provided on one protrusion member 17 is also possible.

It is also possible to form a part of the housing using resin and to form the protrusions integrally with the housing made of resin.

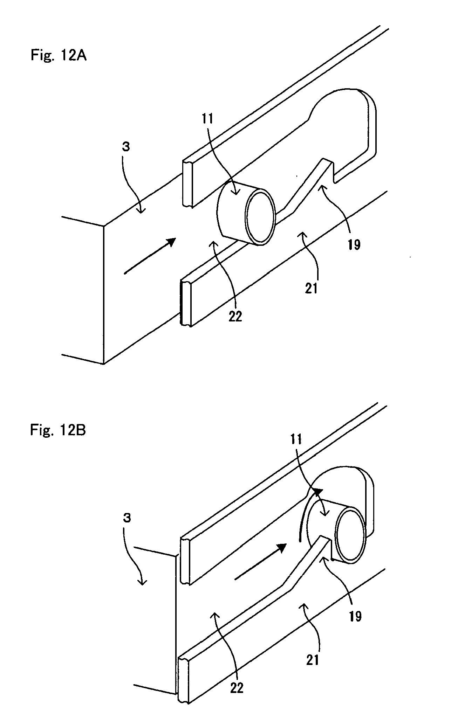

With reference to FIG. 12, the following explains another example of the configuration for preventing the disk drive of the present invention from being separated from the system unit. In this example of the configuration, a part of the long groove 22 is used as an engagement part 19. As shown in FIG. 12A, the protrusion 11 is slid along the long groove 22. As shown in FIG. 12B, the protrusion 11 is brought into engagement with the engagement part 19 by forcing the protrusion 11 to climb over a protrusion created on the engagement part 19 for preventing the protrusion 11 from being moved backward. This prevents the disk drive from being separated from the system unit.

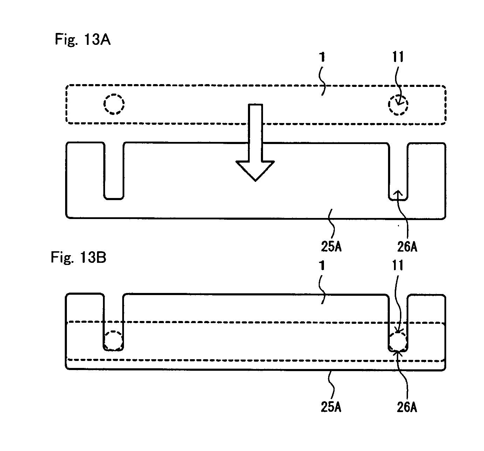

Although the disk drive is installed by moving it right and left (horizontally) in relation to the system unit in the configuration in the embodiments described above, the present invention may also be applied to the configuration in which the disk drive is moved up and down (vertically) in relation to the system unit as shown in FIG. 13.

FIG. 13 is a diagram showing the system side support member and the disk drive viewed from the side. A system side support member 25A has long grooves 26A each having its top-end opened and running up and down (vertically). The disk drive 1 (shown by the broken line in FIG. 13) is installed by inserting the protrusions 11 into the long grooves 26A as shown in FIG. 13A and by fitting the protrusions 11 into the bottom of the long grooves 26A as shown in FIG. 13B.

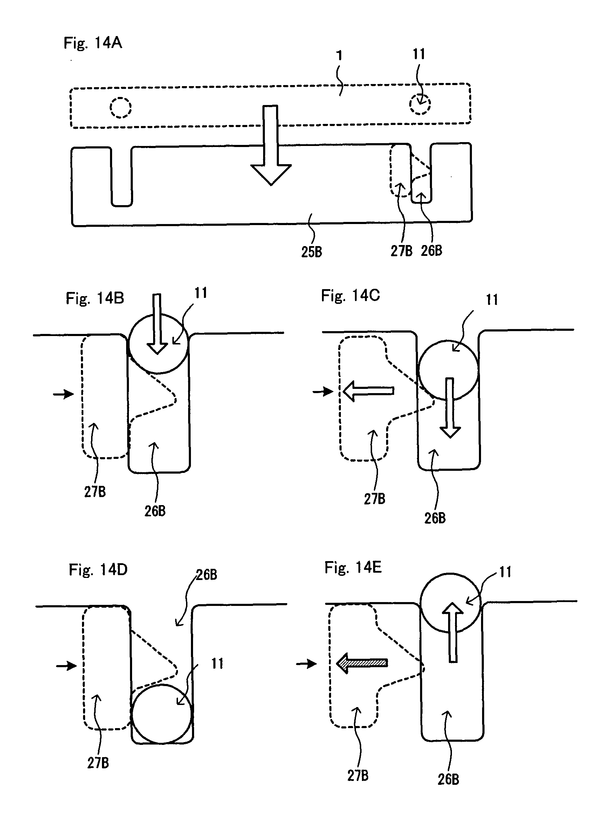

A mechanism for preventing the disk drive from being separated from the system unit can also be provided in the configuration described above in which the disk drive is moved into up and down direction (vertically) in relation to the system unit. The following describes an example of the separation prevention mechanism with reference to FIG. 14 to FIG. 16.

In a first example shown in FIG. 14, a lever member 27B is installed adjacent to a long groove 26B, which is formed in a system side support member 25B and runs up and down (vertically), in such a way that it is energized into the direction in which its part its part protrudes into the long grooves 26B. FIG. 14A shows the relation between the disk drive 1 and the system side support member 25B, and FIG. 14B to FIG. 14E show the separation prevention operation.

To install the disk drive 1 in the system side, the protrusion 11 is inserted into the long groove 26B. The leading edge of the inserted protrusion 11 abuts on the inclined part of the lever member 27B protruded into the long groove 26B (FIG. 14B). The protrusion 11 further moves down in the long groove 26B while pushing the abutted lever member 27B horizontally against the energizing force (FIG. 14C). When the protrusion 11 reaches a predetermined position in the long grooves 26B, the lever member 27B is disengaged from the protrusion 11 and is returned to the original position by the energizing force. At this time, the protrusion 11 fits in the long groove 26B and is held in the long groove 26B by the lever member 27B (FIG. 14D).

To remove the disk drive 1 from the system side, the lever member 27B is, for example, manually moved against the energizing force to release the protrusion 11 so that it can move in the long groove 26B and then the protrusion 11 is removed from the long groove 26B.

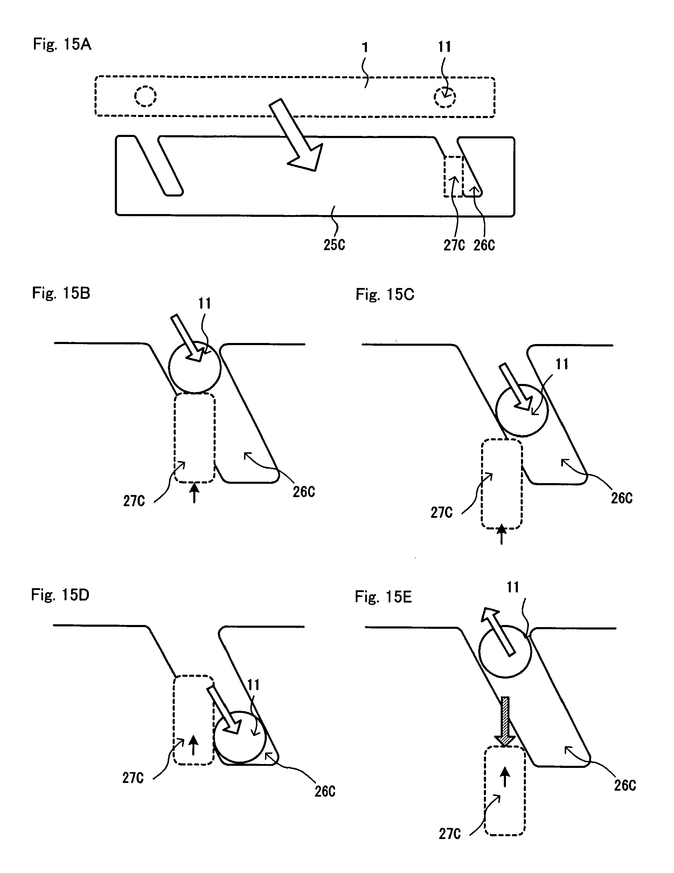

In a second example shown in FIG. 15, a lever member 27C is installed so that it can move up and down (vertically) in relation to a long groove 26C, which is formed in a system side support member 25C and runs vertically at a slant (slanted vertical direction), and is energized into the direction in which a part of it protrudes into the long groove 27C. FIG. 15A shows the relation between the disk drive 1 and the system side support member 25C, and FIG. 15A to FIG. 15E show the separation prevention operation.

To install the disk drive 1 in the system side, the protrusion 11 is inserted into the long groove 26C. The leading edge of the inserted protrusion 11 abuts on the inclined part of the lever member 27C protruded into the long groove 26C (FIG. 15B). The protrusion 11 further moves down in the long groove 26C while pushing the abutted lever member 27C down against the energizing force (FIG. 15C). When the protrusion 11 reaches a predetermined position in the long grooves 26C, the lever member 27C is disengaged from the protrusion 11 and is returned to the original position by the energizing force. At this time, the protrusion 11 fits in the long grooves 26C and is held in the long groove 26C by the lever member 27C (FIG. 15D).

To remove the disk drive 1 from the system side, the lever member 27C is, for example, manually moved against the energizing force to release the protrusion 11 so that it can move in the long groove 26C and then the protrusion 11 is removed from the long groove 26C.

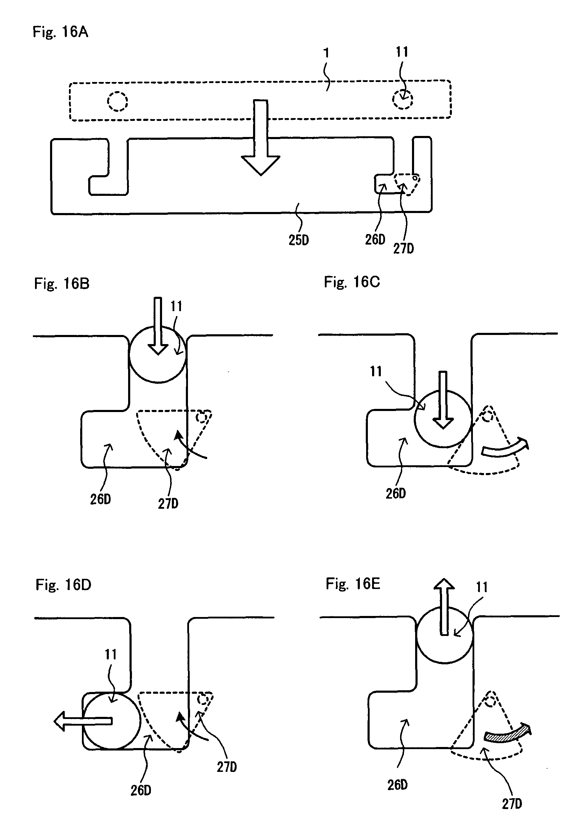

In a third example shown in FIG. 16, a lever member 27D is installed so that it can be rotated into or out of an L-shaped long groove 26D, which is formed in a system side support member 25D and has its bottom-end curved, and is energized into the direction in which a part of it protrudes into the long groove 27D. FIG. 16A shows the relation between the disk drive 1 and the system side support member 25D, and FIG. 16A to FIG. 16E show the separation prevention operation.

To install the disk drive 1 in the system side, the protrusion 11 is inserted into the long groove 26D. The leading edge of the inserted protrusion 11 abuts on the lever member 27D protruded into the long groove 26D (FIG. 16B). The protrusion 11 further moves down in the long groove 26D while rotating the abutted lever member 27D against the energizing force (FIG. 16C). When the protrusion 11 reaches a predetermined position in the long groove 26D, the lever member 27D is disengaged from the protrusion 11 and is returned to the original position by the energizing force. At this time, the protrusion 11 fits in the long grooves 26D and is pushed into, and held in, the curved part in the long groove 26D by the lever member 27D (FIG. 16D).

To remove the disk drive 1 from the system side, the lever member 27D is, for example, manually turned against the energizing force to release the protrusion 11 so that it can move in the long grooves 26D and then the protrusion 11 is removed from the long groove 26D.

Although a long groove is used as the fitting unit in the above examples, the fitting unit need not always be a configuration using the log groove described above but may be a configuration using a guide unit.

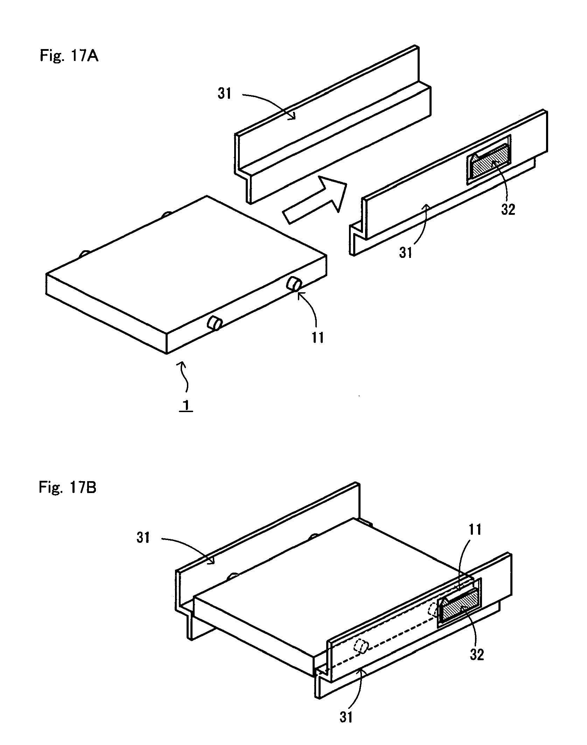

With reference to FIGS. 17 to FIG. 20, the following describes an example of a configuration in which a guide unit is used as a fitting unit.

FIG. 17 is a diagram showing how a disk drive fits into the system unit using a guide unit. Referring to FIG. 17, to install the disk drive 1 in the system side, the protrusion 11 on the housing 2 is slidably supported on the guide surface of a guide unit 31 and the protrusion 11 is brought into engagement with an engagement part provided on the guide unit 31.

In the example shown in FIG. 17A, the guide unit 31, which has a curved shape with an L-shaped cross section, constitutes the support surface. The horizontal support surface allows the protrusion 11 of the disk drive 1 to be slid in the long direction to support the disk drive 1. The vertical support surface ensures the correct horizontal alignment of the protrusion 11 of the disk drive 1 (direction at right angles to the sliding direction) to guide the disk drive 1 into the sliding direction and, at the same time, fixes the disk drive 1 in the system unit using an engagement unit 32.

The engagement unit 32 is required for at least one of protrusions 11 on the disk drive 1.

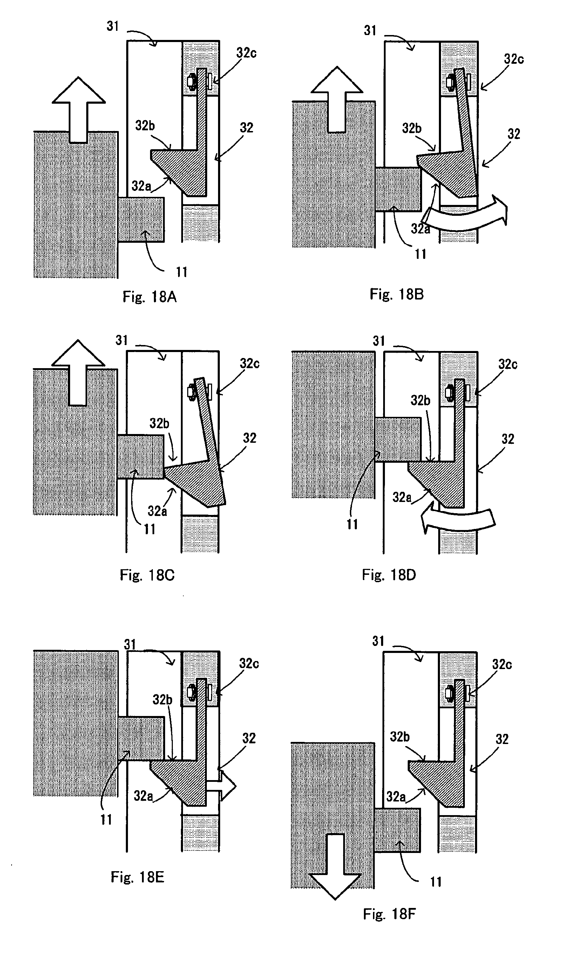

With reference to FIGS. 18-20, the following describes an example of the configuration of an engagement unit when the guide unit is used as the fitting unit.

The engagement unit 32 shown in FIG. 18 has a cam configuration in which one end of the engagement unit 32 is oscillatably supported by a support unit 32c and the other end has two abutment surfaces 32a and 32b. The support unit 32c is supported by a spring on the vertical support surface of the guide unit 31, and the abutment surfaces 32a and 32b are provided so that they protrude from the support surface to the movement line along which the protrusion 11 of the disk drive 1 slides. The support unit 32c energizes the abutment surfaces 32a and 32b so that they are positioned on the movement line of the protrusion 11. This energizing force should be strong enough for the cam to be oscillated into the support surface side, but not for preventing the disk drive 1 from being inserted, when the protrusion 11 abuts on the abutment surface 32a.

FIG. 18A to FIG. 18D show how the protrusion 11 engages the engagement unit 32, and FIG. 18E and FIG. 18E show how the protrusion 11 is disengaged from the engagement unit 32.

As the protrusion 11 of the disk drive 1 , which is guided by the vertical support surface, slides on the horizontal support surface of the guide unit 31 (FIG. 18A), the protrusion 11 abuts on the abutment surface 32a protruded onto the movement line of the protrusion 11. When the protrusion 11 abuts on the abutment surface 32a, the engagement unit 32 is pushed by the force by which the disk drive 1 is inserted. This pushing force, if greater than the energizing force of the support unit 32c, oscillates the engagement unit 32 (FIG. 18B).

Because the engagement unit 32 oscillates, the protrusion 11 can slide without being blocked by the abutment surface 32a (FIG. 18C). As the protrusion 11 further slides and the other end of the protrusion 11 reaches the abutment surface 32b, the engagement unit 32 is returned to the original position by the energizing force of the support unit 32c and the other end of the protrusion 11 engages the abutment surface 32b to prevent the disk drive 1 from being disengaged (FIG. 18D).

To remove the disk drive 1 from the system side, the engagement unit 32 is, for example, oscillated manually against the energizing force of the engagement unit 32 to disengage the protrusion 11 from the abutment surface 32b (FIG. 18E) and the disk drive 1 is slid along the guide unit 31 (FIG. 18F).

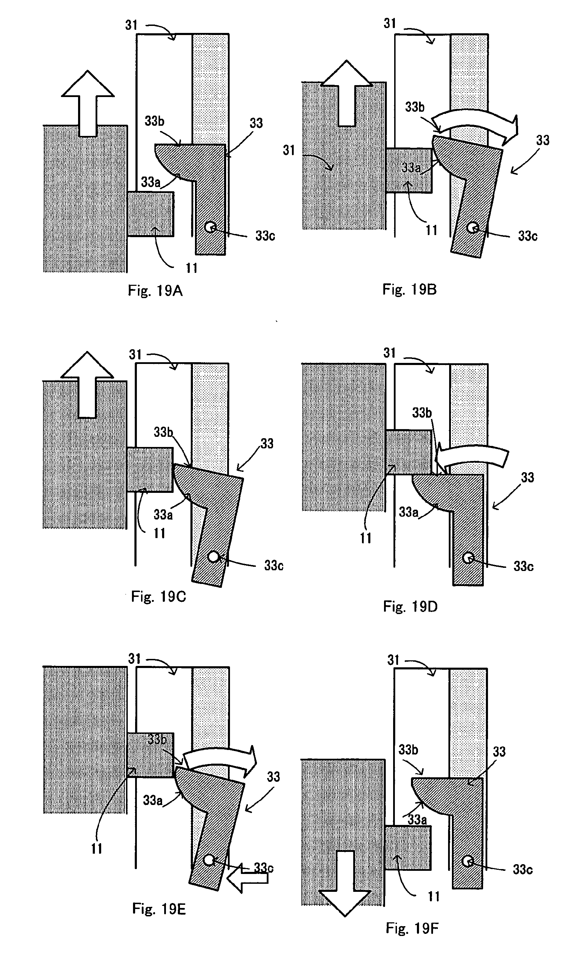

An engagement unit 33 shown in FIG. 19 has another cam configuration in which one end of the engagement unit 33 is energized into one direction and is supported rotatably by a rotation support unit 33c and the other end has two abutment surfaces 33a and 32b.

The support unit in FIG. 18 described above has a cam-oscillating and supporting configuration in which the abutment surfaces are provided in the side from which the protrusion 11 of the disk drive 1 enters, while the example in FIG. 19 has a cam-rotating and supporting configuration in which the abutment surfaces are provided in the side opposite to the side from which the protrusion 11 of the disk drive 1 enters. The operation is almost the same.

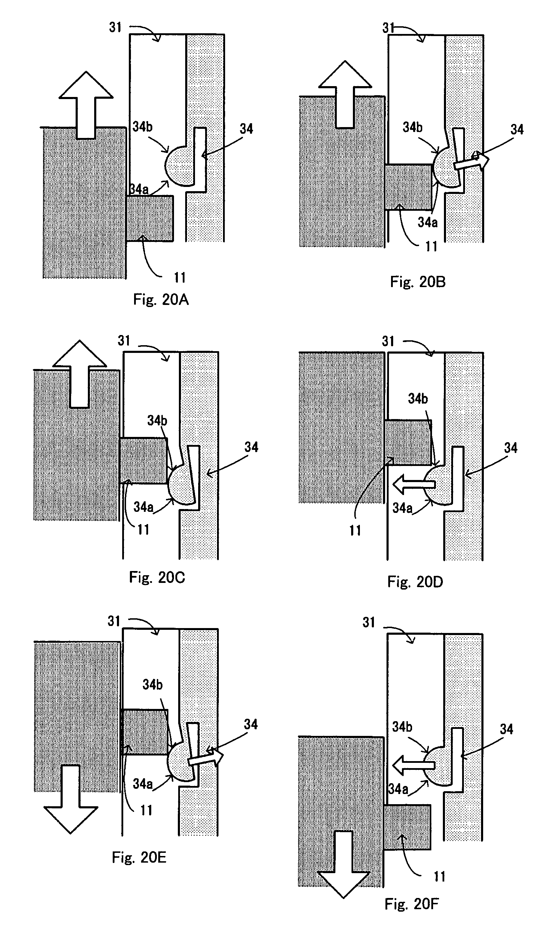

An engagement unit 34 shown in FIG. 20 is a configuration example in which a displaceable protrusion is formed on the support surface of the guide unit 31. This protrusion can be formed by protruding a part of the support surface of the guide unit 31 into the inward direction. Because a part of the support surface is used as the support element, one end is energized into one direction by the elasticity of the guide unit 31 itself and is rotatably supported and the other end has two abutment surfaces 34a and 34b.

The abutment surfaces 34a and 34b are provided so that they protrude from the support surface onto the movement line along which the protrusion 11 of the disk drive 1 slides. Because the support surface of the guide unit 31 is formed with the abutment surfaces 34a and 34b protruded, the abutment surfaces 34a and 34b are energized so that they are on the movement line of the protrusion 11 when displaced. This energizing force should be strong enough for the protrusion 11 to displace the abutment surfaces 34a into the support surface side, but not for preventing the disk drive 1 from being inserted, when the protrusion 11 abuts on the abutment surface 34a. This energizing force can be set according to the length and the thickness of the cantilever part forming the abutment surfaces 34a and 34b.

The abutment surfaces 34a and 34b may be formed either on the vertical support surface or on horizontal support surface of the guide unit 31.

FIG. 20A to FIG. 20D show how the protrusion 11 engages the engagement unit 34, and FIG. 20E and FIG. 20F show how the protrusion 11 is disengaged from the engagement unit 34.

When the protrusion 11 of the disk drive 1 is slid on the horizontal support surface of the guide unit 31 using the vertical support surface (FIG. 20A), the protrusion 11 abuts on the abutment surface 34a protruded on the movement line of the protrusion 11. When the protrusion 11 abuts on the abutment surface 34a, the engagement unit 34 is pushed by the inserting force of the disk drive 1. This pushing force, if greater than the energizing force of the elasticity of the guide unit 31, displaces the engagement unit 34 (FIG. 20B).

Because the engagement unit 32 is displaced, the protrusion 11 can slide without being blocked by the abutment surface 34a (FIG. 20C). As the protrusion 11 further slides and the other end of the protrusion 11 reaches the abutment surface 34b, the engagement unit 34 is returned to the original position by the energizing force of the support unit 34c and the other end of the protrusion 11 engages the abutment surface 34b to prevent the disk drive 1 from being disengaged (FIG. 20D).

To remove the disk drive 1 from the system side, the disk drive 1 is, for example, pulled manually against the energizing force of the engagement unit 34. By pulling the disk drive 1 with a force greater than the energizing force, the protrusion 11 is disengaged from the abutment surface 34b (FIG. 20E) and the disk drive 1 is slid along the guide unit 31 (FIG. 20F).

According to the configuration example in FIG. 20, the engagement unit can be integrally formed on the support surface when it is formed on the guide unit 31. This decreases the number of parts and makes the assembly easy.

The embodiments of the present invention eliminate the need for installation using screws and therefore increase installation work efficiency. In addition, the embodiments prevent the housing from being deformed or warped, thus preventing head misalignment.

### INDUSTRIAL APPLICABILITY

The disk drive and the disk drive installation mechanism according to the present invention are applicable to an FD (flexible disk: floppy (registered trademark) disk) device, an MO (magneto optical disc) disc device, a CD (compact disc)-ROM disc device, and a DVD (digital video disc) disc device.

## Claims

1. A disk drive comprising:
a head for recording on and reading from a disk;
a disk driving motor for rotating the disk;
a housing in which said head and said disk driving motor are stored; and
an installation structure for installing said disk drive in a system unit side,
wherein said installation structure comprises a fitting member that fits in the system unit side for determining an installation position of said disk drive in said system unit side.

2. The disk drive according to claim 1 wherein said fitting member is a protrusion that protrudes from said housing.

3. The disk drive according to claim 1 wherein said protrusion constitutes a guide that slides on a fitting unit on the system unit side.

4. The disk drive according to claim 3 wherein said fitting unit is a long groove.

5. The disk drive according to claim 2 or 3 wherein said protrusion is formed integrally with said housing.

6. The disk drive according to claim 5 wherein said housing is formed by a plate material and said protrusion is formed by burring.

7. The disk drive according to one of claims 2 - 6 wherein said protrusion is formed in a hollow cylindrical shape having an opening at an end of protrusion.

8. The disk drive according to claim 7 wherein a screw part is formed on an inside surface of a hollow of the cylindrical shape of said protrusion.

9. The disk drive according to claim 7 or 8 wherein, in said installation structure, an outside surface of said cylindrical shape is a fitting surface that fits in a mating installation structure provided on said system unit side.

10. The disk drive according to claim 7 or 8 wherein, in said installation structure, the hollow of said protrusion is used as a screw hole via which said installation structure is screwed onto a mating installation structure provided on said system unit side.

11. The disk drive according to claim 1 wherein said fitting member is a long groove provided on a housing.

12. The disk drive according to claim 11 wherein an inside surface of said long groove is used as a fitting surface that fits a protrusion provided on a mating installation structure provided on said system unit side.

13. The disk drive according to claim 12 wherein said mating installation structure comprises a lever member that latches the protrusion on said system unit side.

14. The disk drive according to one of claims 1-13 wherein said fitting member is provided on a side and/or a bottom of said housing.

15. A disk drive according to one of claims 2-10 wherein said housing comprises a frame that supports said head and said disk driving motor and a top cover and a bottom cover that engage the frame to cover a top and a bottom of the frame and
said protrusion is formed on the bottom cover of said housing.

16. A disk drive comprising:
a head for recording on and reading from a disk; and
an installation structure for installing said disk drive in a system unit side,
wherein said housing is made of a plate material,
said installation structure comprises a protrusion that fits in the system unit side for determining an installation position of said disk drive in said system unit side and that protrudes from said housing,
said protrusion is formed by burring and is formed in a hollow cylindrical shape having an opening at an end of protrusion, and
in said installation structure, an outside surface of said cylindrical shape is a fitting surface that fits in a mating installation structure provided on said system unit side.

17. An installation mechanism for installing a disk drive in a system unit, said disk drive comprising a head for recording on and reading from a disk; a disk driving motor for rotating the disk; a housing in which said head and said disk driving motor are stored; and an installation structure for installing said disk drive in a system unit side,
wherein said disk drive comprises a protrusion that protrudes from said housing and
said system unit comprises a fitting unit in which said protrusion fits; and a lever member for latching said protrusion.

18. The installation mechanism for installing a disk drive according to claim 17 wherein said fitting unit is a long groove.

19. The installation mechanism for installing a disk drive according to claim 18 wherein said protrusion slides in said long groove for fitting therein.
